Europäisches Patentamt

European Patent Office

Office européen des brevets

(19)

(11) **EP 0 416 904 B1**

(12) **EUROPEAN PATENT SPECIFICATION**

(45) Date of publication and mention
of the grant of the patent:
**20.11.1996 Bulletin 1996/47**

(51) Int Cl.6: **G02B 7/28**, G03B 3/10

(21) Application number: **90309732.7**

(22) Date of filing: **05.09.1990**

(54) **Exposure control device in a camera**

Vorrichtung zur Belichtungssteuerung in einer Kamera

Dispositif de réglage d'exposition pour caméra

(84) Designated Contracting States:
**DE FR GB**

(30) Priority: **06.09.1989 JP 231041/89**

(43) Date of publication of application:
**13.03.1991 Bulletin 1991/11**

(60) Divisional application: **96101422.2**

(73) Proprietor: **NIKON CORPORATION
Tokyo (JP)**

(72) Inventors:
• **Takagi, Tadao
Yokohama-shi, Kanagawa-ken (JP)**

• **Kai, Tadao
Takatsu-ku, Kawasaki-shi, Kanagawa-ken (JP)**
• **Uchiyama, Shigeyuki
Tokyo (JP)**
• **Iwasaki, Hiroyuki
Tokyo (JP)**

(74) Representative: **Burke, Steven David et al**
**R.G.C. Jenkins & Co.**
**26 Caxton Street**
**London SW1H 0RJ (GB)**

(56) References cited:
**US-A- 4 339 185**        **US-A- 4 774 401**
**US-A- 4 851 657**

**Description**

BACKGROUND OF THE INVENTION

Field of the Invention

This invention relates to an exposure control device in a camera.

Related Background Art

There has heretofore been an exposure control device in a camera which effects the distance measurement of a plurality of areas of the object field and carries out exposure calculation by the use of the output of a light metering area corresponding to an area which is in focus.

In such a device, however, too much importance is attached to the output of the light metering area corresponding to the area which is in focus and use is not made of the output of a light metering area corresponding to an area which is out of focus, and this has led to the problem that a resultant photograph is partly properly exposed, but generally suffers from unbalanced exposure.

This problem appears particularly remarkable in a scene wherein the luminance variation is great.

The document US-A-4,774,401 discloses an exposure control device in which the centre portion of an image plane is divided into concentric light-metering areas, some of which overlap a distance measuring area.

The document US-A-4,339,185 discloses an exposure control device in which the light measurements of measurements of areas of an image are weighted according to the kind of scene to be photographed.

SUMMARY OF THE INVENTION

The present invention has been made in view of such a problem peculiar to the prior art and seeks to provide an exposure control device in a camera which can obtain well-balanced exposure.

According to one aspect of the present invention there is provided an exposure control device for a camera, comprising: focus detection means for calculating a plurality of defocus amounts corresponding to a plurality of focus detection areas; first light metering means for light-metering a plurality of light metering areas each at least partly overlapping with at least one of said plurality of focus detection areas and producing a plurality of first light metering outputs; second light metering means for light-metering at least one other area than said plurality of light metering areas and producing at least one second light metering output; and

exposure amount calculating means for calculating a proper exposure amount on the basis of said plurality of first light metering outputs when at least one of said plurality of defocus amounts is within a predetermined range, and on the basis of said at least one second light metering output without the use of said plurality of first light metering outputs when each of said plurality of defocus amounts exceeds said predetermined range.

The device may further comprise weight producing means for producing a plurality of weights corresponding to said plurality of focus detection areas on the basis of said plurality of defocus amounts; wherein the exposure amount calculating means calculates the proper exposure amount on the basis of said plurality of weights and said plurality of first light metering outputs when said at least one of said plurality of defocus amounts is within said predetermined range.

With regard to the weighting in an embodiment of the present invention, the defocus amount is divided into one for the forward focusing area and one for the rearward focusing area, and even for the same defocus amount, the weighting amount of the forward focusing area and the weighting amount of the rearward focusing area are set to different values.

Further, in an embodiment of the present invention there is provided a distance measuring element array for focus detection, and light metering is effected by the use of the output of said distance measuring element array.

Furthermore, in an embodiment of the present invention, there is provided light measuring means for light-metering the outside of a plurality of detection areas, and when a defocus amount within a predetermined value exists among a plurality of calculated defocus amounts, proper exposure is calculated by the use of the light metering information in the plurality of detection areas, and when the defocus amount within the predetermined value does not exist, proper exposure is calculated by the use of the light metering information outside the plurality of detection areas.

In such an exposure control device in an embodiment of the present invention, the focus detection areas are classified by the amount of defocus and the result thereof is used for the calculation of proper exposure and therefore, there can be obtained photographs of well-balanced exposure and the problem peculiar to the prior art can be solved.

According to another aspect of the present invention, there is provided a method as claimed in claim 18.

BRIEF DESCRIPTION OF THE DRAWINGS

Figure 1 is a block diagram of a first embodiment of the device according to the present invention.

Figure 2 shows the positional relation between the light metering photoelectric conversion element of split metering means and the photoelectric conversion element group of focus detection means.

Figures 3A, 3B and 3C show the relationship between the in-focus state of each area and the light metering area corresponding to each area when the photoelectric conversion element group is divided into six areas.

Figure 4 is a flow-chart of the processing by focusing state classifying means.

Figure 5 is a flow chart of the processing by exposure calculating means.

Figure 6 is a block diagram showing a second embodiment of the present invention.

Figure 7 is a flow chart of the processing by the exposure calculating means of the second embodiment.

Figure 8 shows the positional relation between the light metering photoelectric conversion element of split metering means in a third embodiment of the present invention and the photoelectric conversion element group of focus detection means.

Figures 9A, 9B and 9C show the relations between the in-focus state of each area and the light metering area corresponding to each area when in the third embodiment, the photoelectric conversion element group is divided into eight areas.

Figure 10 shows the curves of the classification boundary values of the amount of defocus in the process flow of Figure 11 relative to the photographing magnification.

Figure 11 is a flow chart of the processing by focusing state classifying means.

Figure 12 is a flow chart of the processing by exposure calculating means.

DESCRIPTION OF THE PREFERRED EMBODIMENTS

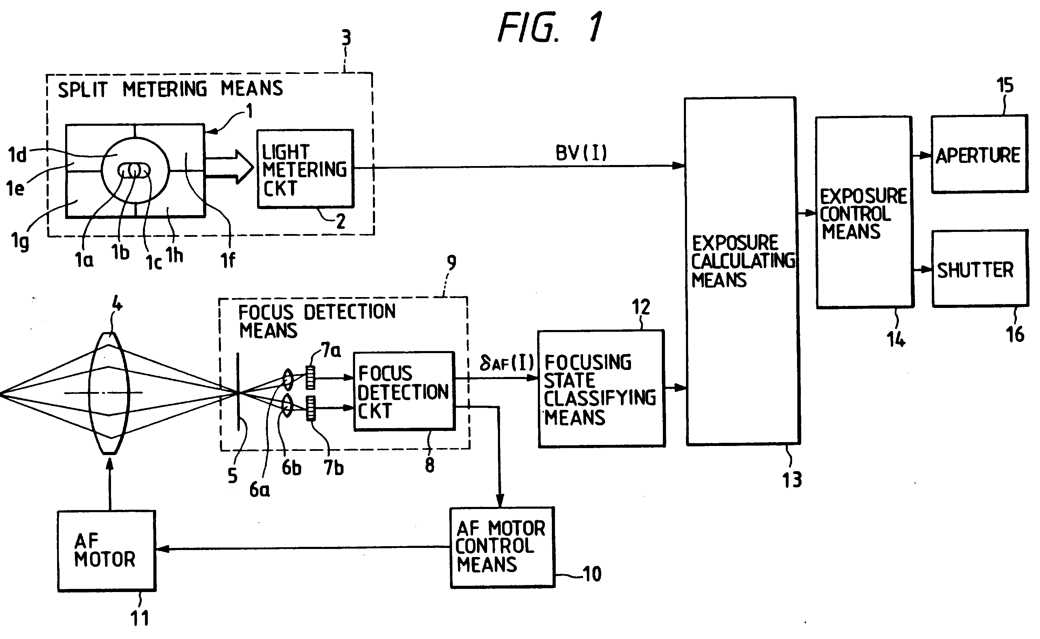

Figure 1 is a block diagram showing an embodiment of the present invention.

In Figure 1, the reference numeral 4 designates a photo-taking lens which, in the present embodiment, is focus-controlled by an AF motor 11. Focus detection means 9 is provided rearwardly of the photo-taking lens 4, and re-coupling lenses 6a, 6b and photoelectric conversion element groups 7a, 7b are disposed rearwardly of the predetermined focal plane 5 of the lens 4. The outputs of the photoelectric conversion element groups 7a and 7b are input to a focus detection circuit 8, in which the imaged positions of the photoelectric conversion element groups 7a and 7b are compared with each other, whereby an in-focus or out-of-focus state is determined, and when the lens is out of focus, a forward focusing or rearward focusing state is determined and further, the defocus amount $\delta_{AF}(1)$ of the forward focusing or the rearward focusing state is calculated.

Each of photoelectric conversion element groups 7a and 7b is an element group comprising 120 picture elements, and in this embodiment, each group is divided, for example, into six detection areas ($I= 1-6$), and the defocus amounts $\delta_{AF}(1)$ - $\delta_{AF}(6)$ in the respective detection areas are detected.

The output of the focus detection circuit 8 provided in the focus detection means 9 is input to focusing state classifying means 12 and AF motor control means 10. The AF motor control means 10, during an out-of-focus state, moves the lens 4 by the AF motor 11 and causes it to reach the in-focus state.

The focusing state classifying means 12 classifies each detection area from the defocus amounts $\delta_{AF}(1)$ - $\delta_{AF}(6)$ into one of

①considerable forward focusing,

②somewhat forward focusing,

③in-focus,

④somewhat rearward focusing, and

⑤considerable rearward focusing,

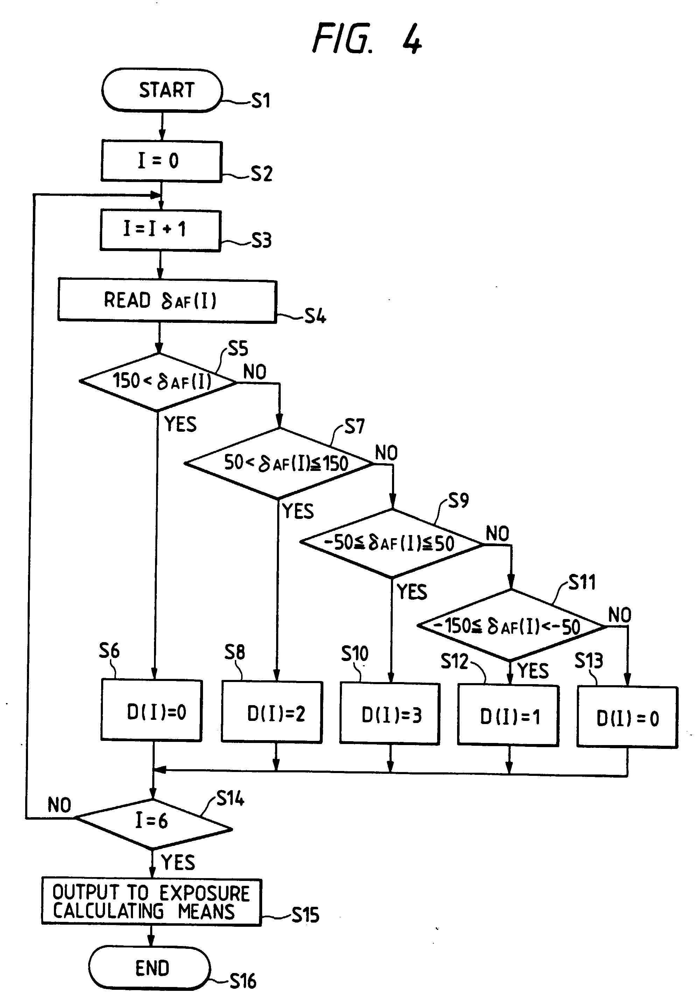

and gives it a weighting amount D(I) and outputs this to exposure calculating means 13. The details of this will be described later with reference to Figure 4.

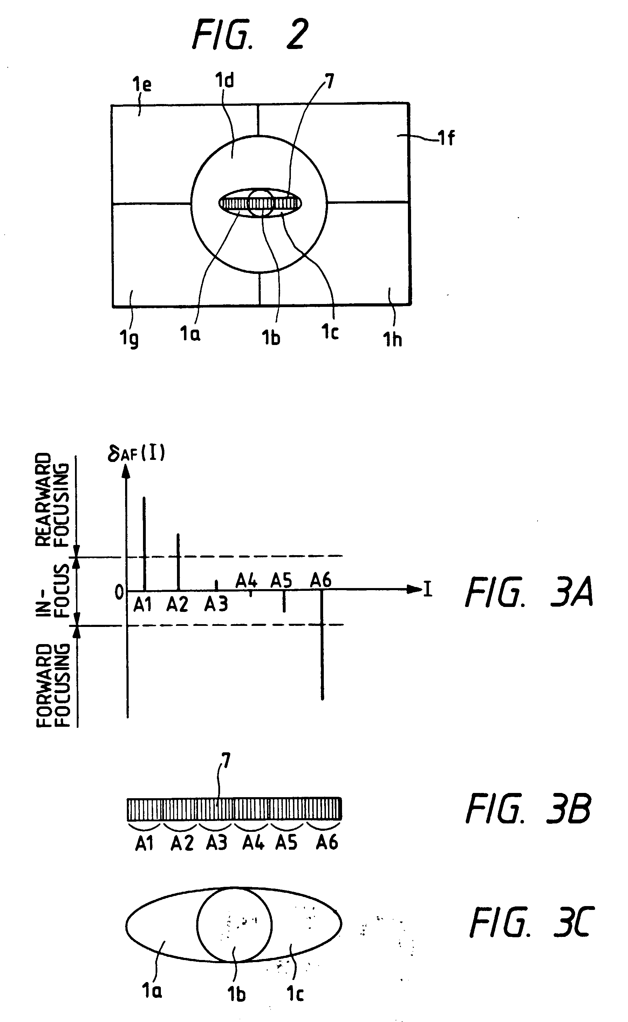

The reference numeral 3 denotes split metering means provided with a light metering photoelectric conversion element 1 and a light metering circuit 2. The light metering photoelectric conversion element 1 divides the object field into eight areas, i.e., central portions 1a-1c, the near-central portion 1d and marginal portions 1e-1h, as shown, and light-meters these areas. Here, the positions of the central area 1a-1c in the light metering photoelectric conversion element 1 are in a relation corresponding to the distance measuring zone position in the focus detection means 9. The details of this correspondence relation will be described later with reference to Figure 2.

The light metering outputs from the light metering photoelectric conversion element 1 divided into eight areas are input to the light metering circuit 2. The light metering circuit 2 converts each light metering output into a luminance value BV(I) by the use of a fully open F value signal $F_o$, not shown, detected by the photo-taking lens 4, and outputs it to the exposure calculating means 13.

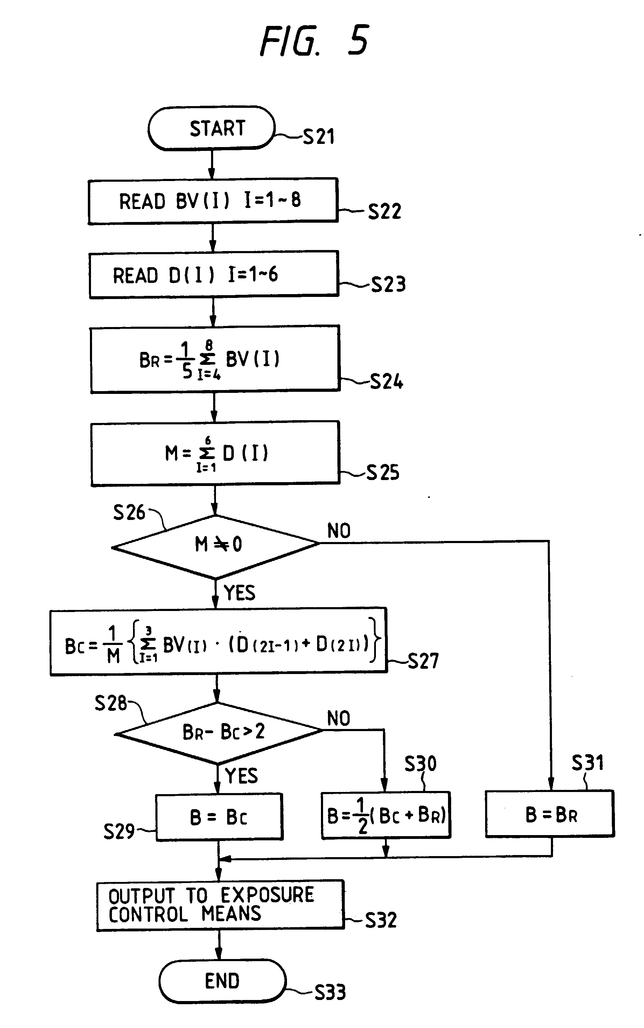

The exposure calculating means 13 receives the output of the split metering means 3 and the output of the focusing state classifying means 12, calculates a proper exposure B in accordance with an algorithm which will be described later with reference to Figure 5 and outputs it to exposure control means 14. In response to this output, the exposure control means 14 controls an aperture 15 and a shutter 16.

The positional relations between the central areas 1a-1c of the light metering photoelectric conversion element 1 and the photoelectric conversion element group 7 of the focus detection means 9 will now be described with reference to Figures 2, 3B and 3C.

As shown in Figure 2, the lengthwise widths of the central areas 1a-1c of the light metering photoelectric conversion element 1 are set to substantially the same relative to the lengthwise width of the photoelectric conversion element group 7. Further, as shown in Figures 3B and 3C, areas A1 and A2 occupying the left one-third of the photoelectric conversion element group 7 are disposed correspondingly to the light metering area 1a at the left of the central portion, areas A3 and A4 occupying the central one-third of the photoelectric conversion element group 7 are disposed correspondingly to the central light metering area 1b of the central portion, and areas A5 and A6 occupying the right one-third of the photoelectric conversion element group 7 are disposed correspondingly to the light metering area 1c at the right of the central portion.

Figure 3A plots the areas A1-A6 of the photoelectric conversion element group as the horizontal axis and the defocus amount $\delta_{AF}$ and the direction thereof as the vertical axis, and the positional relation of the horizontal axis corresponds to Figures 3B and 3C. The areas A1-A6 each are an aggregate of photoelectric conversion elements, and each of these areas is designed so as to be capable of detecting the absolute value of the defocus amount and the direction thereof (forward focusing, in-focus or rearward focusing). In this embodiment, the areas A1 and A2 represent the rearward focusing, the areas A3-A5 are within a predetermined defocus amount and therefore represent in-focus, and the area A6 represents forward focusing.

The substance of the processing by the focusing state classifying means 12 will now be described with reference to Figure 4.

First at S1, the program starts, and at S2, the initial value of I=0 is set. At S3, I+1 is substituted for the area number, and at S4, the defocus amount $\delta_{AF}(I)$ is read.

Here, as regards the signs of $\delta_{AF}(I)$, + represents forward focusing and - represents rearward focusing, and I corresponds to the areas A1-A6 of Figure 3A.

At first, I=1 and therefore, at S5, whether $\delta_{AF}(1)$ is greater than 150 μm is discriminated with the area A1 as the object, and if it is greater than 150 μm, it means considerable forward focusing and thus, advance is made to S6, where D(1)=0 is allotted to the area 1 (I=1). If $\delta_{AF}(1)$ is not greater than 150 μm, advance is made to S7, where whether $\delta_{AF}(1)$ is within the range of

$$50 \ \mu m < \delta_{AF}(1) \leqq 150 \ \mu m$$

is discriminated, and if it is within said range, it means somewhat forward focusing and thus, advance is made to S8, where D(1)=2 is allotted.

If $\delta_{AF}(1)$ is not within said range, advance is made to S9, where whether $\delta_{AF}(1)$ is within the range of

$$-50 \ \mu m \leqq \delta_{AF}(1) \leqq 50 \ \mu m$$

is discriminated, and if it is within this range, it means in-focus and thus, advance is made to S10, where D(1) = 3 is allotted.

If $\delta_{AF}(1)$ is not within said range, advance is made to S11, where whether $\delta_{AF}(1)$ is within the range of

$$-150 \ \mu m \leqq \delta_{AF} < -50 \ \mu m$$

is discriminated, and if it is within this range, it means somewhat rearward focusing and thus, advance is made to S12, where D(1) = 1 is allotted. If $\delta_{AF}(1)$ is not within said range, it means considerable rearward focusing and thus, advance is made to S13, where D(1) = 0 is allotted.

When the above-described classification is terminated, advance is made to S14, and since I is not I=6, return is made to S3, where similar allotment is effected with respect to the next I=2 (the area A2). When the allotment of all the six areas is terminated, advance is made to S15, where outputting to the exposure calculating means 13 is effected, and at S16, the program comes to an end.

Figure 5 shows the substance of the processing by the exposure calculating means 13. The program starts from S21, and at S22, the luminance output BV(I) of the split metering means 3 is read. I indicates the number of the divided light metering areas, and has a value of I=1-8. I=1 corresponds to the output of the portion 1a of the photoelectric conversion element, I=2 corresponds to the portion 1b, and likewise I=8 corresponds to the portion 1h.

Subsequently, at S23, D(I)(I= 1-6) allotted to each distance measuring area by the processing by the focusing state classifying means 12 shown in Figure 4 is read.

At S24, the average luminance value $B_R$ of the five areas of I=4-8 is calculated in accordance with the following equation:

$$B_R = \{\sum_{I=4}^{8} BV(I)\}/5. \qquad \qquad \ldots \ (1)$$

At S25, the sum of D(1)-(6) is found in accordance with the following equation:

$$M = \sum_{I=1}^{6} D(I). \qquad \qquad \ldots \ (2)$$

If at S26, M≠0, at least one of the six areas A1-A6 is in focus or approximate thereto and therefore, advance is made to S27, where weighting is effected to the respective luminance values of the areas 1a, 1b and 1c in the in-focus state in accordance with the following equation:

$$B_C = \{\sum_{I=1}^{3} BV(I) \cdot (D(2I-1) + D(2I))\}/M \qquad \ldots \ (3)$$

and the luminance value of the central portion is calculated.

As is apparent from these equations (1) - (3), more importance is attached to the light metering value of the portion which is better in the in-focus state.

At S28, the luminance difference between $B_R$ and $B_c$ is calculated, and when it exceeds 2EV, advance is made to S29, where the calculated value $B_c$ of only the central portion is given as the exposure value to B. When the luminance difference is 2EV or less, advance is made to S30, where the average $(Bc + B_R)/2$ of the central portion and the marginal portion is given as the exposure value to B.

If at S26, M=0, all of the six areas A1-A6 are considerable forward focusing or considerable rearward focusing and therefore, advance is made to S31, where the calculated value $B_R$ of the marginal portion is given as the exposure value to B.

Then, advance is made to S32, where the result is output to the exposure control means 14, and at S33, the program comes to an end.

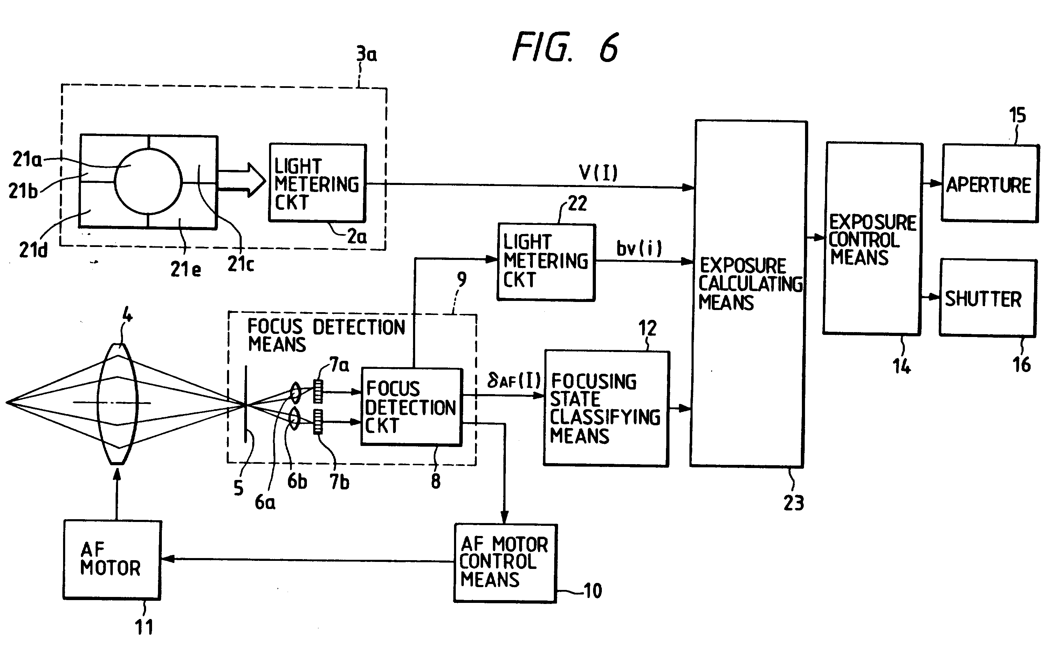

Figure 6 shows a second embodiment of the present invention. In Figure 6, portions functionally similar to those in Figure 1 are given identical reference numerals and need not be described.

The differences of the Figure 6 embodiment from the Figure 1 embodiment are that photoelectric conversion means provided in the split metering means 3a is divided into five areas 21a-21e and that the light metering of the central portion is found from the output of the focus detection circuit 8. A light metering circuit 22 is designed to determine the luminance value in conformity with the charge accumulation time of each element of the CCD type photoelectric conversion element group 7 obtained in the focus detection circuit 8, but this is not always restrictive in carrying out the invention.

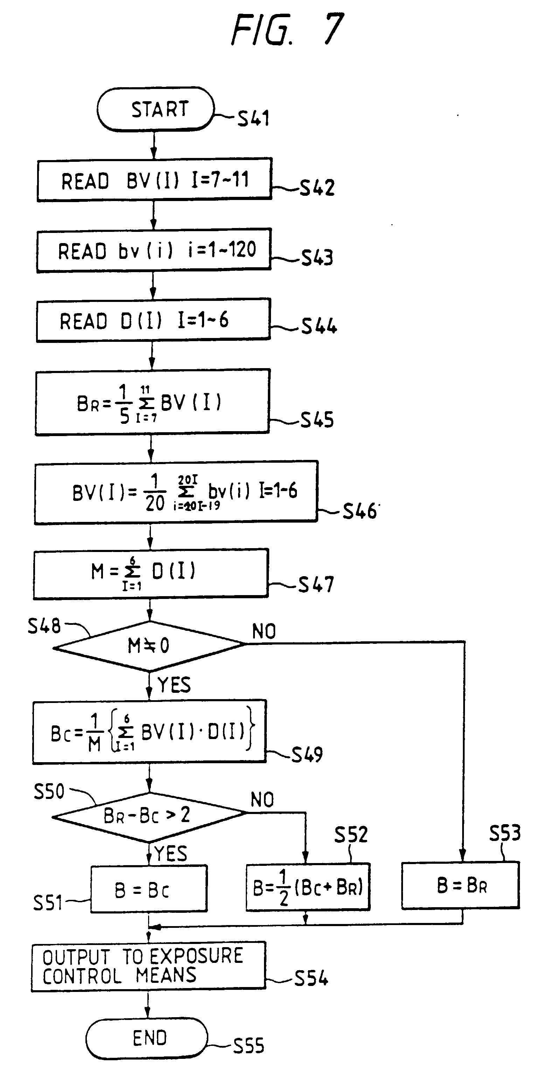

Figure 7 shows the substance of the processing by exposure calculating means 23.

First, at S41, the program starts, and at S42, the luminance values of the areas 21a-21e of the photoelectric conversion element 21 are read as BV(7)-BV(11). Subsequently, at S43, from the light metering circuit 22, the luminance values bv(i) of the respective elements of the distance measuring photoelectric conversion element group 7 are read up to bv(1) - bv(120). Then, at S44, from the focusing state classifying means 12, D(I) is read up to D(1) - D(6).

At S45, the average value of the areas 21a-21e of the photoelectric conversion element 21 is calculated in accordance with the following equation:

$$B_R = \{\sum_{I=7}^{11} BV(I)\}/5. \qquad \ldots (4)$$

At S46, in accordance with the following equation:

$$BV(I) = \{\sum_{i=20I-19}^{20I} bv(i)\}/20, \qquad \ldots (5)$$

the average value of bv(l) - bv(20) is allotted to BV(1), and the average value of bv(21)-bv(40) is allotted to BV(2), and likewise up to BV(6).

At S47, the sum of D(1) - D(6) is found in accordance with the following equation:

$$M = \sum_{I=1}^{6} D(I). \qquad \ldots (6)$$

If at S48, M≠0, at least one area is in focus or approximate thereto and therefore, advance is made to S49, where weighting is effected to the luminance values of the respective areas in the in-focus state in accordance with the following equation:

$$B_C = \{\sum_{I=1}^{6} BV(I) \cdot D(I)\}/M \qquad \ldots (7)$$

and the luminance value of the central portion is calculated.

As is apparent from these equations (4) - (7), more importance is attached to the light metering value of the portion in which the in-focus state is better. S50-S55 are similar to S28-S33 of Figure 5 and therefore need not be described.

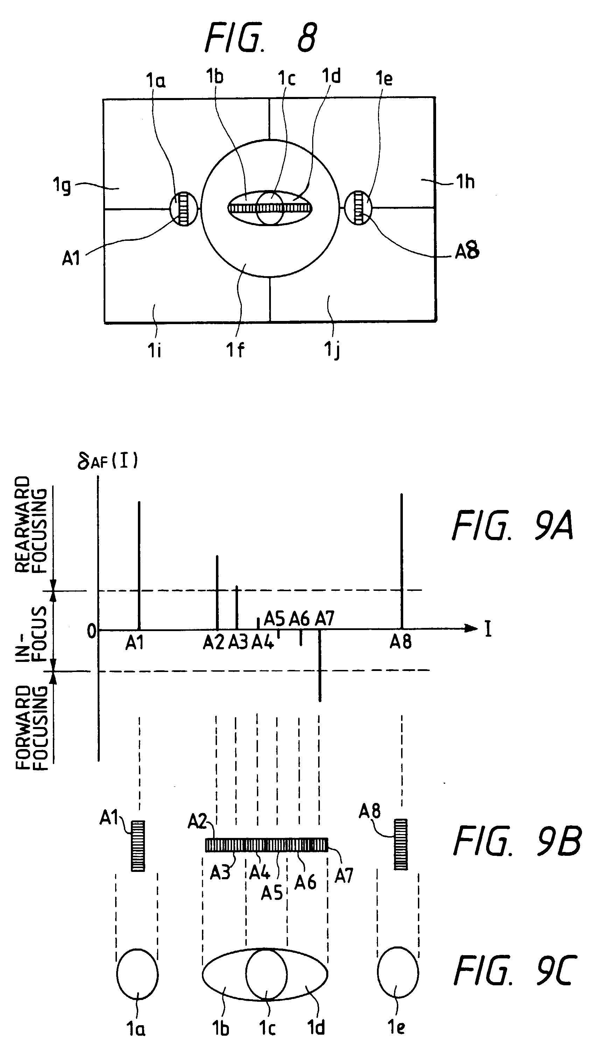

Figures 8 to 12 show a third embodiment of the present invention.

This third embodiment is such that as shown in Figure 8, light metering areas la and le and distance measuring areas A1 and A8 corresponding thereto are newly disposed in the marginal portion of Figure 2.

Figure 9A plots the distance measuring areas A1-A8 of the photoelectric conversion element group as the horizontal axis and plots the defocus amount $\delta_{AF}$ and the direction thereof as the vertical axis, and the positional relations between the distance measuring areas A1-A8 of the horizontal axis are shown in Figure 9B, and the positional relations between the light metering areas 1a-1e of the horizontal axis are shown in Figure 9C.

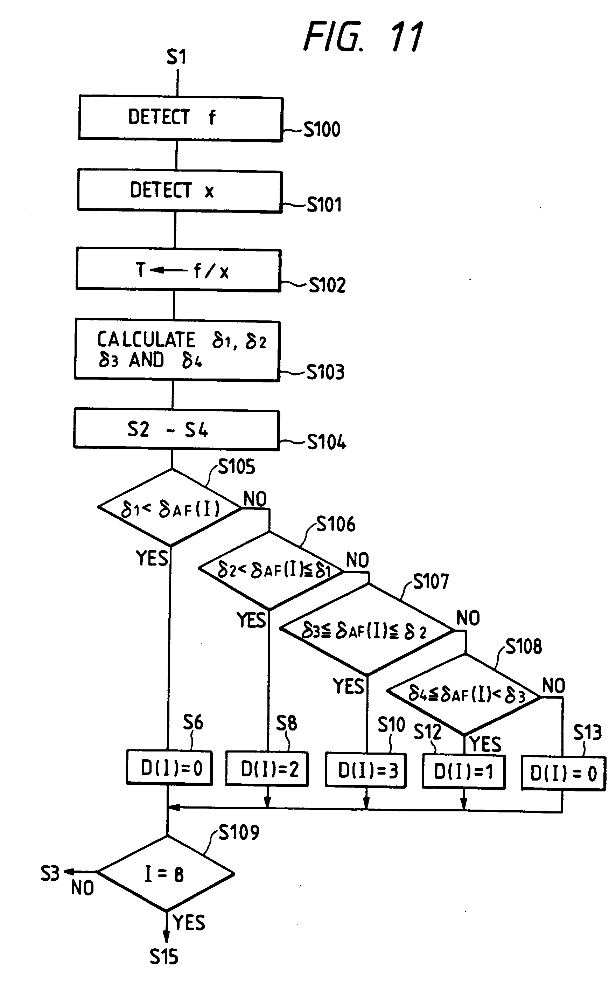

The third embodiment is characterized in that in the process flow of Figure 11 by the focusing state classifying means, the boundary value of the classification of the defocus amount is changed by a photographing magnification M.

That is, at S100 of Figure 11, the focal length f is detected, and at S101, the photographing distance x is detected and further, at S102, the photographing magnification T is calculated as

$$T = f/x.$$

Subsequently, by the process of S103, the boundary values $\delta_1$ - $\delta_4$ of the classification of the defocus amount are

calculated as:

$$\delta_1 = (9 \times 10^5) \cdot T^2 + 60$$

$$\delta_2 = (2 \times 10^5) \cdot T^2 + 30$$

$$\delta_3 = (-2 \times 10^5) \cdot T^2 - 30$$

$$\delta_4 = (-9 \times 10^5) \cdot T^2 - 60$$

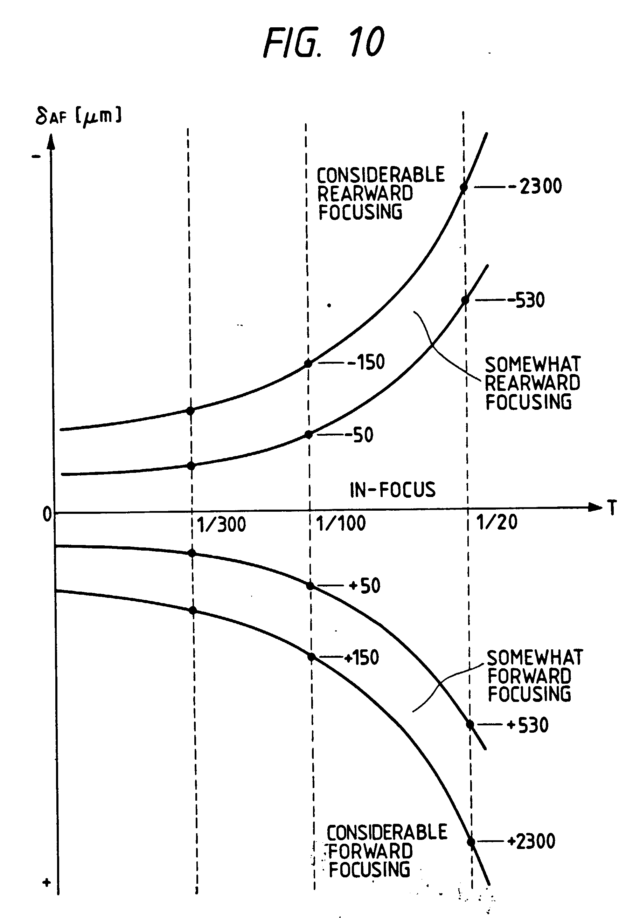

Figure 10 shows examples of the curves of the boundary values $\delta_1$ - $\delta_4$ of the classification of the defocus amount obtained in the process of S100-S103 of Figure 11 relative to the photographing magnification T.

In Figure 10, specifically examining, for example, the boundaries of the classification relative to the photographing magnification T,
when T = 1/100,

$+150 < \delta_{AF}$ ... considerable forward focusing

$+50 < \delta_{AF} \leqq +150$ ... somewhat forward focusing

$-50 \leqq \delta_{AF} \leqq +50$ ... in-focus

$-150 \leqq \delta_{AF} < -50$ ... somewhat rearward focusing

$\delta_{AF} < -150$ ... considerable rearward focusing

and when T = 1/20,

$+2300 < \delta_{AF}$ ... considerable forward focusing

$+530 \leqq \delta_{AF} \leqq +2300$ ... somewhat forward focusing

$-530 \leqq \delta_{AF} \leqq +530$ ... in-focus

$-2300 \leqq \delta_{AF} < -530$ ... somewhat rearward focusing

$\delta_{AF} < -2300$ ... considerable rearward focusing

The process of S104 and so on of Figure 11 is basically the same as that of Figure 4, but differs from the latter in that the boundary values at S105, S106, S107 and S108 are boundary values $\delta_1$ - $\delta_4$ calculated at S103. Also, the maximum value of the area number I of S109 is I=8.

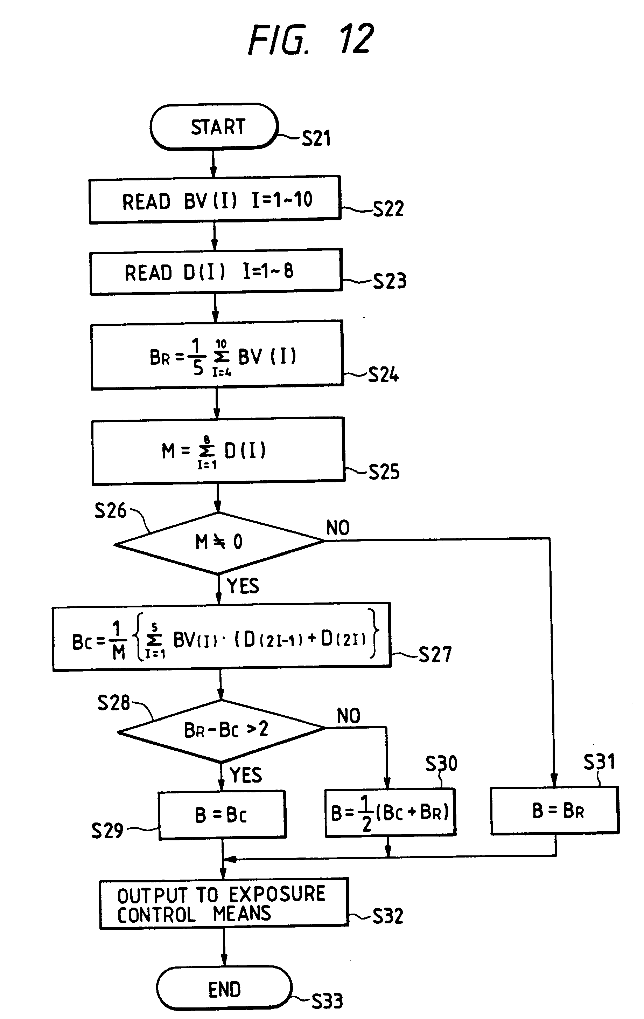

Figure 12 shows the process flow by the exposure calculating means of the third embodiment executed subsequently to the process of Figure 11, and corresponds to the process flow of Figure 5.

In the case of Figure 12, as shown in Figure 8, the distance measuring areas are increased to eight, i.e., A1-A8, and the light metering areas are increased to ten, i.e., 1a-1j, and therefore, correspondingly thereto, at S22, the luminance output BV(I) is read with respect to I=1-10, and at S23, on the assumption that I=1-8, D(I) allotted to each distance measuring area by the process of Figure 11 is read.

At S24, the average luminance value $B_R$ of the areas I=4-10 is calculated. At S25, the sum total of D(1) - D(8) determined by I=1-8 is found.

At S27, the weighting by the in-focus state is effected on the sum total of the luminance values BV(1) - BV(5) of the areas I=1-5 to thereby calculate the luminance value $B_c$ of the central portion. In the other points, the flow of Figure 12 is the same as the flow of Figure 5.

As described above, according to the present invention, the focus detection area is divided into a plurality of units so that the in-focus state can be detected for each unit and by the use of this in-focus state information, weighting is effected on the outputs of the light metering area divided into a plurality of areas and proper exposure may be calculated and therefore, photographs of well-balanced exposure can be obtained.

Further, if design is made such that as in the second embodiment, the light metering output is calculated by the use of the focus detection means, more effects can be expected such as the possibility of the light metering area being finely divided, and the elimination of the necessity of the alignment between the light metering means and the focus detection means.

**Claims**

1. An exposure control device for a camera, comprising:

focus detection means (9) for calculating a plurality of defocus amounts ($\delta$AF(I)) corresponding to a plurality of focus detection areas (A1-A6, A1-A8);
first light metering means (2; 22) for light-metering a plurality of light metering areas (la-lc; la-le) each at least partly overlapping with at least one of said plurality of focus detection areas and producing a plurality of first light metering outputs (BV(I); bv(i));
second light metering means (2; 2a) for light-metering at least one other area (1d-1h; 21a-21e; 1f-1i) than said plurality of light metering areas and producing at least one second light metering output (BV (I)) ; and
exposure amount calculating means (13; 23) for calculating a proper exposure amount (B) on the basis of said plurality of first light metering outputs when at least one of said plurality of defocus amounts is within a predetermined range, and on the basis of said at least one second light metering output without the use of said plurality of first light metering outputs when each of said plurality of defocus amounts exceeds said predetermined range.

2. A device as claimed in claim 1, further comprising:

weight producing means (12) for producing a plurality of weights (D(I)) corresponding to said plurality of focus detection areas on the basis of said plurality of defocus amounts ($\delta$AF(I));
wherein the exposure amount calculating means (13; 23) calculates the proper exposure amount on the basis of said plurality of weights and said plurality of first light metering outputs (BV(I); bv(i)) when said at least one of said plurality of defocus amounts is within said predetermined range.

3. A device according to claim 2, wherein for a defocus amount ($\delta$AF(I)) indicative of the fact that the object image is focused forward of a film surface and a defocus amount indicative of the fact that the object image is focused rearward of the film surface, said weight producing means (12) produces the weights (D(I)) so that even if the absolute values of said two defocus amounts are equal to each other, the values of the weights corresponding to said two defocus amounts may differ from each other.

4. A device according to claim 2 or 3, further having exposure control means (14) for controlling exposure on the basis of the output of said exposure amount calculating means (13; 23), said exposure amount calculating means calculating the average luminance value ($B_R$) of said at least one other light metering area on the basis of said at least one second light metering output (BV(I)), and outputting a signal conforming to said average luminance value to said exposure control means when the sum (M) of said plurality of weights (D(I)) is a predetermined value (S26; S48).

5. A device according to claim 2 or 3, wherein said exposure amount calculating means (13; 23) calculates the average luminance value ($B_R$) of said at least one other light metering area on the basis of said at least one second light metering output (BV(I)), calculates the weighted mean luminance value ($B_c$) of said plurality of light metering areas on the basis of said plurality of weights (D(I)), and compares said average luminance value ($B_R$) with said weighted mean luminance value ($B_c$).

6. A device according to claim 5, further having exposure control means (14) for controlling exposure on the basis of the output of said exposure amount calculating means (13; 23), said exposure amount calculating means outputting a signal (B) conforming to said weighted mean luminance value ($B_c$) to said exposure control means when said average luminance value ($B_R$) minus said weighted mean luminance value exceeds a predetermined value (S28; S50).

7. A device according to claim 5, further having exposure control means (14) for controlling exposure of the output of said exposure amount calculating means (13; 23), said exposure amount calculating means calculating a proper luminance value (B) from said average luminance value ($B_R$) and said weighted mean luminance value ($B_c$) when said average luminance value minus said weighted mean luminance value does not exceed a predetermined value (S28; S50).

8. A device according to claim 2, wherein said exposure amount calculating means (13; 23) calculates the average luminance value ($B_R$) of said at least one other light metering area (1d-1h; 21a-1e; 1f-1j) on the basis of said at least one second light metering output (BV(I)), calculates the weighted mean luminance value ($B_c$) of said plurality of light metering areas (1a-1c; 1a-1e) on the basis of said plurality of weights (D(I)), and calculates a proper luminance value (B) on the basis of said average luminance value and said weighted mean luminance value.

9. A device according to claim 2, or any preceding claim when dependent on claim 2, wherein said exposure amount calculating means (13; 23) multiplies each of said plurality of first light metering outputs (BV(I)) by at least a corresponding one of said plurality of weights (D(I)) to calculate the mean ($B_c$) of said plurality of first light metering outputs.

10. A device according to claim 2 of any preceding claim when dependent on claim 2, wherein said weight producing means (12) determines said plurality of weights (D(I)) on the basis of said plurality of defocus amounts ($\delta AF(I)$) and a photographing magnification (T).

11. A device according to claim 10, which further comprises means for detecting the focal length (F) of a photographing lens (4), and wherein said weight producing means (12) determines the photographing magnification (T) on the basis of said detected focal length.

12. A device according to any preceding claim, wherein said plurality of focus detection areas are arranged in a plurality of groups (A1, A2-A7, A8) which do not adjoin each other.

13. A device according to any preceding claim, wherein said focus detection means (9) has a plurality of focus detection photoelectric conversion elements (7; 7a, 7b) and calculates said plurality of defocus amounts ($\delta AF(I)$) from the outputs of said plurality of photoelectric conversion elements, and said first light metering means (22) produces said plurality of light metering outputs (bv(I)) on the basis of the outputs of at least some of said plurality of photoelectric conversion elements.

14. A device as claimed in any one of claims 1 to 9, wherein at least some of the focus detecting areas (A1-A6, A2-A7) extend along a predetermined direction in the object field, and the first and second light metering means (2; 2a; 22) are provided with a light metering photoelectric conversion element (1) for light-metering said plurality of and said at least one other light metering areas in the object field, a part of said plurality of light metering areas (1a-1c; 1b-1d) overlapping said at least some focus detecting areas, the at least one other light metering area (1d-1h; 1a, 1e-1j) being arranged around said part of said plurality of light metering areas, and a part of said light metering photoelectric conversion element corresponding to said part of said plurality of light metering areas being disposed along a direction corresponding to said predetermined direction.

15. A device according to claim 14, wherein said part of said light metering photoelectric conversion element (1) corresponds to three of said plurality of light metering areas (1a-1c; 1b-1d).

16. A device according to claim 14 or 15, wherein a predetermined part of said photoelectric conversion element (1) corresponds to an annular area (1d; 1f) which encloses said part of said plurality of light metering areas (1a-1c; 1b-1d), and another part of said photoelectric conversion element corresponds to four light metering areas (1e-1h; 1g-1j) which enclose said annular area.

17. A camera including an exposure control device as claimed in any preceding claim.

18. A method of determining an exposure value (B) for a camera, wherein the defocus amounts ($\delta AF(I)$) for respective focus detection areas (A1-A6, A1-A8) are checked to determine whether any of said defocus amounts ($\delta AF(I)$) lies within a predetermined range; the exposure value being calculated on the basis of the amounts of detected light (BV(I), bv(i)) from respective light-metering areas (1a-1c; 1a-1e) each at least partially overlapping at least one of said focus detection areas when at least one of said defocus amounts is within said predetermined range, and

EP 0 416 904 B1

being calculated on the basis of the amount of detected light (BV(I)) from at least one further light-metering area (1d-1h; 21a-21e; 1f-1j) other than said respective light-metering areas when each of said defocus amounts is outside said predetermined range.

**Patentansprüche**

1. Eine Belichtungssteuerungsvorrichtung für eine Kamera, umfassend:

    eine Fokusdetektionseinrichtung (9) zum Berechnen einer Mehrzahl von Defokusbeträgen ($\delta$AF(I)), die einer Mehrzahl von Fokusdetektionsbereichen (A1-A6, A1-A8) entsprechen;

    eine erste Lichtmeßeinrichtung (2; 22) zum Messen des Lichts in einer Mehrzahl von Lichtmeßbereichen (1a-1c; 1a-1e), von denen jeder wenigstens teilweise mit wenigstens einem der Mehrzahl der Fokusdetektionsbereiche überlappt, und zum Erzeugen einer Mehrzahl von ersten Lichtmessungsausgangssignalen (BV(I) ; bv(i));

    eine zweite Lichtmeßeinrichtung (2; 2a) zum Messen des Lichts in wenigstens einem anderen Bereich (1d-1h; 21a-21e; 1f-1i) als der Mehrzahl der Lichtmeßbereiche und zum Erzeugen wenigstens eines zweiten Lichtmessungsausgangssignals (BV(I)); und

    eine Belichtungswertberechnungseinrichtung (13; 23) zum Berechnen eines geeigneten Belichtungswerts (B) auf der Basis der Mehrzahl der ersten Lichtmessungsausgangssignale, wenn wenigstens eines der Mehrzahl der Defokusbeträge innerhalb eines vorbestimmten Bereichs liegt, und auf der Basis des wenigstens einen zweiten Lichtmessungsausgangssignals ohne Verwendung der Mehrzahl der ersten Lichtmessungsausgangssignale, wenn jeder der Mehrzahl der Defokusbeträge über den vorbestimmten Bereich hinausgeht.

2. Eine Vorrichtung nach Anspruch 1, weiter umfassend:

    eine Gewichtungserzeugungseinrichtung (12) zum Erzeugen einer Mehrzahl von Gewichten (D(I)), die der Mehrzahl der Fokusdetektionsbereiche entspricht, auf der Basis der Mehrzahl der Defokusbeträge ($\delta$AF(I));

    in welcher die Belichtungswertsberechnungseinrichtung (13; 23) den geeigneten Belichtungswert auf der Basis der Mehrzahl der Gewichte und der Mehrzahl der ersten Lichtmessungsausgangssignale (BV(I); bv(i)) berechnet, wenn wenigstens eines der Mehrzahl der Defokusbeträge innerhalb des vorbestimmten Bereichs liegt.

3. Eine Vorrichtung nach Anspruch 2, in welcher für einen Defokusbetrag ($\delta$AF(I)), der die Tatsache bezeichnet, daß das Objektbild vor einer Filmoberfläche fokussiert ist, und einen Defokusbetrag, der die Tatsache bezeichnet, daß das Objektbild hinter der Bildoberfläche fokussiert ist, die Gewichtungserzeugungseinrichtung (12) die Gewichte (D(I)) so erzeugt, daß sogar wenn die Absolutwerte der zwei Defokusbeträge einander gleich sind, die Werte der Gewichte, die den beiden Defokusbeträgen entsprechen, voneinander verschieden sein können.

4. Eine Vorrichtung nach Anspruch 2 oder 3, weiter umfassend eine Belichtungssteuereinrichtung (14) zum Steuern der Belichtung auf der Basis der Ausgangssignale der Belichtungswertberechnungseinrichtung (13; 23), wobei die Belichtungswertberechnungseinrichtung den mittleren Helligkeitswert ($B_R$) des wenigstens einen anderen Lichtmeßbereichs auf der Basis des wenigstens einen zweiten Lichtmessungsausgangssignals (BV(I)) berechnet, und ein Signal, das mit dem mittleren Helligkeitswert übereinstimmt, an die Belichtungssteuereinrichtung ausgibt, wenn die Summe (M) der Mehrzahl der Gewichte (D(I)) ein vorbestimmter Wert (S26; S48) ist.

5. Eine Vorrichtung nach Anspruch 2 oder 3, in welchem die Belichtungswertberechnungseinrichtung (13; 23) den durchschnittlichen Helligkeitswert ($B_R$) des wenigstens einen anderen Lichtmeßbereichs auf der Basis des wenigstens einen zweiten Lichtmessungsausgangssignals (BV(I)) berechnet, den mittleren Helligkeitswert ($B_C$) der Mehrzahl der Lichtmeßbereiche auf der Basis der Mehrzahl der Gewichte (D(I)) berechnet und den durchschnittlichen Helligkeitswert ($B_R$) mit dem gewichteten mittleren Helligkeitswert ($B_C$) vergleicht.

6. Eine Vorrichtung nach Anspruch 5, weiter umfassend eine Belichtungssteuereinrichtung (14) zum Steuern der Belichtung auf der Basis des Ausgangssignals der Belichtungswertberechnungseinrichtung (13; 23), wobei die Belichtungswertberechnungseinrichtung ein Signal (B), das mit dem gewichteten mittleren Helligkeitswert ($B_C$) übereinstimmt, an die Belichtungssteuereinrichtung ausgibt, wenn der mittlere Helligkeitswert ($B_R$) minus dem gewichteten mittleren Helligkeitswert einen vorbestimmten Wert (S28; S50) übersteigt.

7. Eine Vorrichtung nach Anspruch 5, weiter umfassend eine Belichtungssteuereinrichtung (14) zum Steuern der Belichtung von dem Ausgangssignals der Belichtungswertberechnungseinrichtung (13; 23), wobei die Belichtungswertberechnungseinrichtung einen geeigneten Helligkeitswert (B) aus dem mittleren Helligkeitswert ($B_R$) und dem gewichteten mittleren Helligkeitswert ($B_C$) berechnet, wenn der durchschnittliche Helligkeitswert minus dem gewichteten mittleren Helligkeitswert einen vorbestimmten Wert (S28; S50) nicht übersteigt.

8. Eine Vorrichtung nach Anspruch 2, in welcher die Belichtungswertberechnungseinrichtung (13; 23) den mittleren Helligkeitswert ($B_R$) des wenigstens einen anderen Lichtmeßbereichs (1d-1h; 21a-1e; 1f-1j) auf der Basis des wenigstens einen zweiten Lichtmessungsausgangssignals (BV(I)) berechnet, den gewichteten mittleren Helligkeitswert ($B_C$) der Mehrzahl der Lichtmeßbereiche (1a-1c; 1a-1e) auf der Basis der Mehrzahl der Gewichte (D(I)) berechnet und einen geeigneten Helligkeitswert (B) auf der Basis des mittleren Helligkeitswerts und des gewichteten mittleren Helligkeitswerts berechnet.

9. Eine Vorrichtung nach Anspruch 2 oder irgendeinem der vorangegangenen Ansprüche, wenn er von Anspruch 2 abhängig ist, in welcher die Belichtungswertberechnungseinrichtung (13; 23) jeden der Mehrzahl der ersten Lichtmessungsausgangssignale (BV(I)) mit wenigstens einem entsprechenden der Mehrzahl der Gewichte (D(I)) multipliziert, um das Mittel ($B_C$) der Mehrzahl der ersten Lichtmessungsausgangssignale zu berechnen.

10. Eine Vorrichtung nach Anspruch 2 oder einem der vorangegangenen Ansprüche, wenn er von Anspruch 2 abhängig ist, in welcher die Gewichtungserzeugungseinrichtung (12) die Mehrzahl der Gewichte (D(I)) auf der Basis der Mehrzahl der Defokusbeträge ($\delta AF(I)$) und einer fotografischen Vergrößerung (T) bestimmt.

11. Eine Vorrichtung nach Anspruch 10, weiter umfassend eine Einrichtung zum Detektieren der Brennweite (F) eines fotografischen Objektivs (4), und in welcher die Gewichtungserzeugungseinrichtung (12) die fotografische Vergrößerung (T) auf der Basis der detektierten Brennweite bestimmt.

12. Eine Vorrichtung nach einem der vorangegangenen Ansprüche, in welchem die Mehrzahl der Fokusdetektionsbereiche in einer Mehrzahl von Gruppen (A1, A2-A7, A8) angeordnet ist, die nicht aneinandergrenzen.

13. Eine Vorrichtung nach einem der vorangegangenen Ansprüche, in welchem die Fokusdetektionseinrichtung (9) eine Mehrzahl von fotoelektrisch konvertierenden Fokusdetektionselementen (7; 7a, 7b) aufweist, und die Mehr-zahl der Defokusbeträge ($\delta AF(I)$) aus den Ausgangssignalen der Mehrzahl der fotoelektrischen konvertierenden Elemente berechnet, und die erste Lichtmeßeinrichtung (22) die Mehrzahl der Lichtmessungsausgangssignale (bv(I)) auf der Basis der Ausgangssignale wenigstens einiger der Mehrzahl der fotoelektrisch konvertierenden Elemente erzeugt.

14. Eine Vorrichtung nach einem der Ansprüche 1 bis 9, in welcher sich wenigstens einige der Fokusdetektionsbereiche (A1-A6, A2-A7) entlang einer vorbestimmten Richtung in dem Objektfeld erstrecken und die ersten und zweiten Lichtmeßeinrichtungen (2; 2a; 22) mit einem fotoelektrisch konvertierenden Lichtmeßelement (1) zum Messen des Lichts in der Mehrzahl von und dem wenigstens einen anderen Lichtmeßbereich in dem Objektfeld vorgesehen sind, wobei ein Teil der Mehrzahl der Lichtmeßbereiche (1a-1c; 1b-1d) mit wenigstens einigen der Fokusdetektionsbereiche überlappt, wobei der wenigstens eine andere Lichtmeßbereich (1d-1h; 1a, 1c-1j) um den Teil der Mehrzahl der Lichtmeßbereiche angeordnet ist, und ein Teil der fotoelektrisch konvertierenden Lichtmeßelemente dem Teil der Mehrzahl der Lichtmeßbereiche entspricht, die entlang einer Richtung, die der vorbestimmten Richtung entspricht, angeordnet ist.

15. Eine Vorrichtung nach Anspruch 14, in welchem der Teil des fotoelektrisch konvertierenden Lichtmeßelements (1) der Mehrzahl der Lichtmeßbereiche (1a-1c; 1b-1d) entspricht.

16. Eine Vorrichtung nach Anspruch 14 oder 15, in welcher ein vorbestimmter Teil des fotoelektrisch konvertierenden Elements (1) einem ringförmigen Bereich (1d; 1f) entspricht, der den Teil der Mehrzahl der Lichtmeßbereiche (1a-1c; 1b-1d) umschließt und ein anderer Teil des fotoelektrisch konvertierenden Elements vier Lichtmeßbereichen (1e-1h; 1g-1j), die den ringförmigen Bereich umschließen, entspricht.

**17.** Eine Kamera, die eine Belichtungssteuerungsvorrichtung nach einem der vorangegangenen Ansprüche umfaßt.

**18.** Ein Verfahren zum Bestimmen des Belichtungswerts (B) für eine Kamera, in welchem die Defokussierbeträge ($\delta$AF (I)) für entsprechende Fokusdetektionsbereiche (A1-A6, A1-A8) überprüft werden, um zu bestimmen, ob einer der Defokusbeträge ($\delta$AF(I)) innerhalb eines vorbestimmten Bereichs liegt; wobei der Belichtungswert auf der Basis der Beträge des detektierten Lichts (BV(I), bv(i)) aus den entsprechenden Lichtmeßbereichen (1a-1c; 1a-1e), von denen jeder wenigstens teilweise wenigstens einen der Fokusdetektionsbereiche überlappt, wenn wenigstens einer der Defokusbeträge innerhalb des vorbestimmten Bereichs liegt, berechnet wird, und auf der Basis des Betrag des detektierten Lichts (BV(I)) von wenigstens einem weiteren Lichtmeßbereich (1d-1h; 21a-21e; 1f-1j), welche andere als die entsprechende Lichtmeßbereiche sind, berechnet wird, wenn jeder der Defokusbeträge außerhalb des vorbestimmten Bereichs liegt.

## Revendications

**1.** Dispositif de commande d'exposition pour un appareil de prise de vues, comprenant:

un moyen (9) de détection de focalisation pour calculer une pluralité de degrés de défocalisations ($\delta$AF(I)) correspondant à une pluralité de zones (A1-A6, A1-A8) de détection de focalisation;

un premier moyen (2; 22) de mesure de lumière pour mesurer la lumière d'une pluralité de zones (1a-1c; 1a-1e) de mesure de lumière se recouvrant chacune au moins partiellement avec au moins l'une de ladite pluralité de zones de détection de focalisation et produisant une pluralité de premières sorties (BV(I) ; bv(i)) de mesure de lumière;

un second moyen (2; 2a) de mesure de lumière pour mesurer la lumière d'au moins une zone (1d-1h; 21a-21e; 1f-1i) autre que ladite pluralité de zones de mesure de lumière et pour produire au moins une seconde sortie (BV(I)) de mesure de lumière; et

un moyen (13; 23) de calcul de degré d'exposition pour calculer un degré (B) d'exposition approprié sur la base de ladite pluralité de premières sorties de mesure de lumière lorsqu'au moins l'un de ladite pluralité de degrés de défocalisation se trouve dans une plage prédéterminée, et sur la base de ladite au moins une seconde sortie de mesure de lumière sans utiliser ladite pluralité de premières sorties de mesure de lumière lorsque chacun de ladite pluralité de degrés de défocalisation excède ladite plage prédéterminée.

**2.** Dispositif selon la revendication 1, comprenant en outre:

un moyen (12) de production de poids pour produire une pluralité de poids (D(I)) correspondant à ladite pluralité de zones de détection de focalisation sur la base de ladite pluralité de degrés de défocalisation ($\delta$AF(I)) ;

le moyen (13; 23) de calcul de degré d'exposition calculant le degré d'exposition appropriée sur la base de ladite pluralité de poids et de ladite pluralité de premières sorties (BV(I); bv(i)) de mesure de lumière lorsque ledit au moins un de ladite pluralité de degrés de défocalisation se trouve dans ladite plage prédéterminée.

**3.** Dispositif selon la revendication 2, dans lequel, pour un degré de défocalisation ($\delta$AF(I)) indicateur du fait que l'image cible est focalisée vers la surface d'un film et pour un degré de défocalisation indicateur du fait que l'image cible est focalisée vers l'arrière de la surface du film, ledit moyen (12) de production de poids produit les poids (D (I)) de telle sorte que, même si les valeurs absolues desdits deux degrés de défocalisation sont égales, les valeurs des poids correspondant auxdits deux degrés de défocalisation peuvent différer les unes des autres.

**4.** Dispositif selon la revendication 2 ou 3, comportant en outre un moyen (14) de commande d'exposition pour commander l'exposition sur la base de la sortie du moyen (13; 23) de calcul de degré d'exposition, ledit moyen de calcul de degré d'exposition calculant la valeur de luminance moyenne ($B_R$) de ladite au moins une autre zone de mesure de lumière sur la base de ladite au moins une seconde sortie (BV(I)) de mesure de lumière, et délivrant un signal conforme à ladite valeur de luminance moyenne audit moyen de commande d'exposition lorsque la somme (M) de ladite pluralité de poids (D(I)) est une valeur prédéterminée (S26; S48).

**5.** Dispositif selon la revendication 2 ou 3, dans lequel ledit moyen (13; 23) de calcul de degré d'exposition calcule la valeur de luminance moyenne ($B_R$) de ladite au moins une autre zone de mesure de lumière sur la base de ladite au moins une seconde sortie (BV(I)) de mesure de lumière, calcule la valeur de luminance moyenne pondérée ($B_C$) de ladite pluralité de zones de mesure de lumière sur la base de ladite pluralité de poids (D(I)), et compare ladite valeur de luminance moyenne ($B_R$) avec ladite valeur de luminance moyenne pondérée ($B_C$).

**6.** Dispositif selon la revendication 5, comportant en outre un moyen (14) de commande d'exposition pour commander l'exposition sur la base de la sortie dudit moyen (13; 23) de calcul de degré d'exposition, ledit moyen de calcul de degré d'exposition délivrant un signal (B) conforme à ladite valeur de luminance moyenne pondérée ($B_C$) audit moyen de commande d'exposition lorsque ladite valeur de luminance moyenne ($B_R$) moins ladite valeur de luminance moyenne pondérée excède une valeur prédéterminée (S28; S50).

**7.** Dispositif selon la revendication 5, comportant en outre un moyen (14) de commande d'exposition pour commander l'exposition de la sortie dudit moyen (13; 23) de calcul de degré d'exposition, ledit moyen de calcul de degré d'exposition calculant une valeur de luminance appropriée (B) à partir de ladite valeur de luminance moyenne ($B_R$) et de ladite valeur de luminance moyenne pondérée ($B_C$), lorsque ladite valeur de luminance moyenne moins ladite valeur de luminance moyenne pondérée n'excède pas une valeur prédéterminée (S28; S50).

**8.** Dispositif selon la revendication 2, dans lequel ledit moyen (13; 23) de calcul de degré d'exposition calcule la valeur de luminance moyenne ($B_R$) de ladite au moins une autre zone (1d-1h; 21a-1e; 1f-1j) de mesure de lumière sur la base de ladite au moins une seconde sortie (BV(I)) de mesure de lumière, calcule la valeur de luminance moyenne pondérée ($B_C$) de ladite pluralité de zones (1a-1c; 1a-1e) de mesure de lumière sur la base de ladite pluralité de poids (D(I)), et calcule une valeur de luminance appropriée (B) sur la base de ladite valeur de luminance moyenne et de ladite valeur de luminance moyenne pondérée.

**9.** Dispositif selon la revendication 2, ou l'une quelconque des revendications précédentes lorsqu'elle dépend de la revendication 2, dans lequel ledit moyen (13; 23) de calcul de degré d'exposition multiplie chacune de ladite pluralité de premières sorties (BV(I)) de mesure de lumière par au moins un poids correspondant de ladite pluralité de poids (D(I)) pour calculer la moyenne ($B_C$) de ladite pluralité de premières sorties de mesure de lumière.

**10.** Dispositif selon la revendication 2 ou l'une quelconque des revendications précédentes lorsqu'elle dépend de la revendication 2, dans lequel ledit moyen (12) de production de poids détermine ladite pluralité de poids (D(I)) sur la base de ladite pluralité de degrés de défocalisation ($\delta$AF(I)) et d'un agrandissement photographique (T).

**11.** Dispositif selon la revendication 10, comprenant en outre un moyen pour détecter la distance focale (F) d'une lentille photographique (4), et dans lequel ledit moyen (12) de production de poids détermine l'agrandissement photographique (T) sur la base de ladite distance focale détectée.

**12.** Dispositif selon l'une quelconque des revendications précédentes, dans lequel ladite pluralité de zones de détection de focalisation sont agencées dans une pluralité de groupes (A1, A2-A7, A8) qui ne sont pas reliés entre eux.

**13.** Dispositif selon l'une quelconque des revendications précédentes, dans lequel ledit moyen (9) de détection de focalisation comporte une pluralité d'éléments (7; 7a, 7b) de conversion photoélectrique de détection de focalisation et calcule ladite pluralité de degrés de défocalisation ($\delta$AF(I)) à partir des sorties de ladite pluralité d'éléments de conversion photoélectrique, et ledit premier moyen (22) de mesure de lumière produit ladite pluralité de sorties (bv(i)) de mesure de lumière sur la base des sorties d'au moins certains de ladite pluralité d'éléments de conversion photoélectrique.

**14.** Dispositif selon l'une quelconque des revendications 1 à 9, dans lequel au moins certaines des zones (A1-A6, A2-A7) de détection de focalisation s'étendent le long d'une direction prédéterminée dans le champ objet, et les premier et second moyens (2; 2a; 22) de mesure de lumière sont pourvus d'un élément (1) de conversion photoélectrique de mesure de lumière pour mesurer la lumière de ladite pluralité de ladite au moins une autre zone de mesure de lumière dans le champ objet, une partie de ladite pluralité de zones (1a-1c; 1b-1d) de mesure de lumière recouvrant lesdites au moins certaines zones de détection de focalisation, ladite au moins une autre zone (1d-1h; 1a, 1e-1j) de mesure de lumière étant disposée autour de ladite partie de ladite pluralité des zones de mesure de lumière, et une partie dudit élément de conversion photoélectrique de mesure de lumière correspondant à ladite partie de ladite pluralité de zones de mesure de lumière disposées le long d'une direction correspondant à ladite direction prédéterminée.

**15.** Dispositif selon la revendication 14, dans lequel ladite partie dudit élément (1) de conversion photoélectrique de mesure de lumière correspond à trois zones de ladite pluralité de zones (1a-1c; 1b-1d) de mesure de lumière.

**16.** Dispositif selon la revendication 14 ou 15, dans lequel une partie prédéterminée dudit élément (1) de conversion photoélectrique correspond à une zone annulaire (1d; 1f) qui entoure ladite partie de ladite pluralité de zones (1a-1c; 1b-1d) de mesure de lumière, et une autre partie dudit élément de conversion photoélectrique correspond à quatre zones (1e-1h; 1g-1j) de mesure de lumière qui entourent ladite zone annulaire.

17. Appareil photographique comportant un dispositif de commande d'exposition selon l'une quelconque des revendications précédentes.

18. Procédé de détermination d'une valeur d'exposition (B) pour un appareil photographique, dans lequel les degrés de défocalisation ($\delta$AF(I)) pour des zones respectives (A1-A6, A1-A8) de détection de focalisation sont contrôlés pour déterminer si l'un quelconque desdits degrés de défocalisation ($\delta$AF(I)) se trouve dans une plage prédéterminée; la valeur d'exposition étant calculée sur la base des quantités de lumière détectée (BV(I), bv(i)) à partir des zones respectives (1a-1c; 1a-1e) de mesure de lumière recouvrant chacune au moins partiellement au moins l'une desdites zones de détection de focalisation lorsqu'au moins l'un desdits degrés de défocalisation se trouve dans ladite plage prédéterminée et étant calculée sur la base de la quantité de lumière détectée (BV(I)) à partir d'au moins une zone supplémentaire (1d-1h; 21a-21e; 1f-1j) de mesure de lumière, autre que lesdites zones respectives de mesure de lumière lorsque chacun desdits degrés de défocalisation est à l'extérieur de ladite plage prédéterminée.

## FIG. 1

SPLIT METERING MEANS

3

1

1d
1e
1g
1a 1b 1c 1h 1f

LIGHT METERING CKT

2

BV(I)

EXPOSURE CALCULATING MEANS

13

EXPOSURE CONTROL MEANS

14

APERTURE

15

SHUTTER

16

FOCUS DETECTION MEANS

9

4

7a

FOCUS DETECTION CKT

8

5 6a 6b 7b

$\delta_{AF}(I)$

FOCUSING STATE CLASSIFYING MEANS

12

AF MOTOR CONTROL MEANS

10

AF MOTOR

11

EP 0 416 904 B1

# FIG. 2

# FIG. 3A

# FIG. 3B

# FIG. 3C

## FIG. 4

```
        START        —S1
          │
          ▼
       I = 0         —S2
          │
          ▼
  ┌──►  I = I + 1    —S3
  │       │
  │       ▼
  │   READ δAF(I)    —S4
  │       │
  │       ▼
  │   ◇ 150 < δAF(I)  S5 ──NO──► ◇ 50 < δAF(I) ≦ 150  S7 ──NO──► ◇ -50 ≦ δAF(I) ≦ 50  S9 ──NO──► ◇ -150 ≦ δAF(I) < -50  S11 ──NO──┐
  │         │YES            │YES                 │YES              S12 │YES  S13         │
  │         │               │                    │                    │                 │
  │    S6   ▼          S8    ▼           S10      ▼                    ▼                  ▼
  │   D(I)=0           D(I)=2            D(I)=3              D(I)=1             D(I)=0
  │       │               │                 │                  │                 │
  │       └───────────────┴─────────────────┴──────────────────┴─────────────────┘
  │       │
  │       ▼
  └──NO── ◇ I = 6   —S14
          │YES
          ▼
  OUTPUT TO EXPOSURE
  CALCULATING MEANS   —S15
          │
          ▼
        END          —S16
```

# FIG. 5

START — S21

READ BV(I) I=1~8 — S22

READ D(I) I=1~6 — S23

$$B_R = \frac{1}{5} \sum_{I=4}^{8} BV(I)$$ — S24

$$M = \sum_{I=1}^{6} D(I)$$ — S25

S26 — $M \neq 0$ — NO

YES

$$B_C = \frac{1}{M} \left\{ \sum_{I=1}^{3} BV(I) \cdot (D(2I-1) + D(2I)) \right\}$$ — S27

S28 — $B_R - B_C > 2$ — NO

YES

S29 — $B = B_C$

S30 — $B = \frac{1}{2}(B_C + B_R)$

S31 — $B = B_R$

OUTPUT TO EXPOSURE CONTROL MEANS — S32

END — S33

# FIG. 6

EP 0 416 904 B1

## FIG. 7

START — S41

READ BV(I) I=7~11 — S42

READ bv(i) i=1~120 — S43

READ D(I) I=1~6 — S44

$B_R = \dfrac{1}{5} \sum\limits_{I=7}^{11} BV(I)$ — S45

$BV(I) = \dfrac{1}{20} \sum\limits_{i=20I-19}^{20I} bv(i) \quad I=1\text{-}6$ — S46

$M = \sum\limits_{I=1}^{6} D(I)$ — S47

S48 — $M \neq 0$ — NO

YES

$B_C = \dfrac{1}{M} \left\{ \sum\limits_{I=1}^{6} BV(I) \cdot D(I) \right\}$ — S49

S50 — $B_R - B_C > 2$ — NO

YES

S51 — $B = B_C$

S52 — $B = \dfrac{1}{2}(B_C + B_R)$

S53 — $B = B_R$

OUTPUT TO EXPOSURE CONTROL MEANS — S54

END — S55

20

## FIG. 8

## FIG. 9A

## FIG. 9B

## FIG. 9C

## FIG. 10

## FIG. 11

S1

| DETECT  f | ~S100 |

| DETECT  x | ~S101 |

| T ←── f / x | ~S102 |

| CALCULATE  $\delta_1$, $\delta_2$ $\delta_3$ AND  $\delta_4$ | ~S103 |

| S2  ~  S4 | ~S104 |

~S105

$\delta_1 < \delta_{AF}(I)$ —— NO

~S106

YES

$\delta_2 < \delta_{AF}(I) \leqq \delta_1$ —— NO

~S107

YES

$\delta_3 \leqq \delta_{AF}(I) \leqq \delta_2$ —— NO

~S108

YES

$\delta_4 \leqq \delta_{AF}(I) < \delta_3$ —— NO

| S6 | S8 | S10 | S12 YES | S13 |

| D(I)=0 | D(I)=2 | D(I)=3 | D(I)=1 | D(I) = 0 |

~S109

S3 ◄── NO    I = 8

YES

S15

# FIG. 12

START — S21

READ BV(I) I=1~10 — S22

READ D(I) I=1~8 — S23

$$B_R = \frac{1}{5} \sum_{I=4}^{10} BV(I)$$ — S24

$$M = \sum_{I=1}^{8} D(I)$$ — S25

S26 — $M \neq 0$ — NO

YES

$$B_C = \frac{1}{M} \left\{ \sum_{I=1}^{5} BV(I) \cdot (D(2I-1) + D(2I)) \right\}$$ — S27

S28 — $B_R - B_C > 2$ — NO

YES

$B = B_C$ — S29

$B = \frac{1}{2}(B_C + B_R)$ — S30

$B = B_R$ — S31

OUTPUT TO EXPOSURE CONTROL MEANS — S32

END — S33